(19) **Europäisches Patentamt**

**European Patent Office**

**Office européen des brevets**

(11) **EP 0 925 486 B1**

(12) **EUROPÄISCHE PATENTSCHRIFT**

(45) Veröffentlichungstag und Bekanntmachung des Hinweises auf die Patenterteilung:
**06.05.2004 Patentblatt 2004/19**

(21) Anmeldenummer: **98936186.0**

(22) Anmeldetag: **17.06.1998**

(51) Int Cl.$^7$: **G01G 19/12**, F16H 59/52

(86) Internationale Anmeldenummer:
**PCT/DE1998/001641**

(87) Internationale Veröffentlichungsnummer:
**WO 1999/002947 (21.01.1999 Gazette 1999/03)**

(54) **VERFAHREN UND VORRICHTUNG ZUR ERMITTLUNG DER FAHRZEUGMASSE**

PROCESS AND DEVICE FOR DETERMINING A VEHICLE'S MASS

PROCEDE ET DISPOSITIF POUR LA DETERMINATION DE LA MASSE D'UN VEHICULE

(84) Benannte Vertragsstaaten:
**DE FR SE**

(30) Priorität: **05.07.1997 DE 19728769**

(43) Veröffentlichungstag der Anmeldung:
**30.06.1999 Patentblatt 1999/26**

(73) Patentinhaber: **ROBERT BOSCH GMBH**
**70442 Stuttgart (DE)**

(72) Erfinder:
* **LEIMBACH, Klaus-Dieter**
  **D-71696 Möglingen (DE)**
* **VEIL, Hans**
  **D-71735 Eberdingen (DE)**
* **HUMMEL, Stefan**
  **D-70191 Stuttgart (DE)**

(56) Entgegenhaltungen:
**EP-A- 0 111 636       DE-A- 4 228 413**
**DE-C- 3 843 818       US-A- 5 434 780**

**Beschreibung**

Stand der Technik

Die Erfindung betrifft ein Verfahren und eine Vorrichtung zur Ermittlung eines die Fahrzeugmasse repräsentierenden Massenwertes mit den Merkmalen der unabhängigen Ansprüche.

Aus dem Stand der Technik sind Systeme zur Steuerung bzw. Regelung der Fahrdynamik bei Kraftfahrzeugen bekannt. Hierbei steht insbesondere die Ansteuerung der Bremssysteme im Vordergrund. Bei solchen Systemen ist die möglichst genaue Kenntnis der Fahrzeugmasse von großer Bedeutung.

Handelt es sich bei dem Kraftfahrzeug um ein Nutzkraftfahrzeug mit einem Zugfahrzeug und einem Anhänger/Auflieger, so läßt sich eine optimale Abstimmung der Bremskräfte im Sinne von Wirtschaftlichkeit, Sicherheit und Fahrkomfort dann erreichen, wenn die Massen des Zugfahrzeugs und des Anhängers/Aufliegers möglichst genau bekannt sind. Ist die Masse des gesamten Lastzuges bekannt, so kann bei bekannter Masse des Zugfahrzeugs die Masse des Anhängers/Aufliegers bestimmt werden. Da aber bei Nutzkraftfahrzeugen bestimmungsgemäß große Unterschiede in der Zuladung und damit in der Gesamtmasse des Fahrzeugs auftreten, muß die Gesamtmasse und die Massenverteilung zwischen Zugfahrzeug und Anhänger/Auflieger stetig neu bestimmt werden. So kann durch eine geeignete Verteilung der Bremsmomente auf die einzelnen Radbremsen die Fahrstabilität gesteigert werden.

Aus der deutschen Patentanmeldung DE 42 28 413 ist eine Bestimmung der Gesamtmasse eines Fahrzeugs bekannt, bei der während eines Beschleunigungsvorgangs des Fahrzeugs die Fahrzeuglängsbeschleunigung und die zugehörigen An- bzw. Vortriebskräfte zu zwei unterschiedlichen kurz hintereinanderfolgenden Zeitpunkten gemessen werden. Abhängig von diesen Meßgrößen kann dann die Fahrzeugmasse ermittelt werden. Hierbei wird davon ausgegangen, daß sich der Fahrwiderstand während der Massenbestimmung, beispielsweise durch eine Änderung der Fahrbahnneigung, nicht wesentlich ändert.

Eine Vorrichtung und ein Verfahren mit den Merkmalen in den Oberbegriffen der unabhängige Ansprüche sind aus der Patentschrift DE 38 43 818 bekannt.

Die Aufgabe der vorliegenden Erfindung besteht darin, eine möglichst genaue und einfache Massenbestimmung unter Berücksichtigung einer gegebenenfalls geneigten Fahrbahn aufzuzeigen.

Diese Aufgabe wird durch die Merkmale der unabhängigen Ansprüche gelöst.

Vorteile der Erfindung

Wie schon erwähnt betrifft die Erfindung die Ermittlung eines die Masse eines Fahrzeugs, insbesondere eines Nutzkraftfahrzeugs, repräsentierenden Massenwertes. Das Fahrzeug weist eine Antriebseinheit und eine Kupplungseinheit auf, wobei durch ein Öffnen der Kupplungseinheit der Kraftfluß zwischen der Antriebseinheit und den Fahrzeugrädern im wesentlichen unterbrochen werden kann. Erfindungsgemäß wird wenigstens ein erster Beschleunigungswert erfaßt, der die Fahrzeugbeschleunigung zu einem ersten Zeitpunkt repräsentiert. Zu diesem ersten Zeitpunkt ist die Kupplungseinheit im wesentlichen geschlossen. Weiterhin wird wenigstens ein erster Antriebswert erfaßt, der die Antriebskraft oder das Antriebsmoment der Antriebseinheit zu dem ersten Zeitpunkt repräsentiert. Der Kern der Erfindung besteht nun darin, daß wenigstens ein zweiter Beschleunigungswert erfaßt wird, der die Fahrzeugbeschleunigung zu einem zweiten Zeitpunkt repräsentiert, zu dem die Kupplungseinheit im wesentlichen geöffnet ist. Dann findet ein Vergleich des erfaßten zweiten Beschleunigungswertes mit wenigstens einem vorgebbaren Schwellenwert statt. Die Ermittlung des Massenwertes geschieht erfindungsgemäß wenigstens abhängig von dem Vergleich und wenigstens abhängig von dem erfaßten ersten Beschleunigungswert und dem erfaßten ersten Antriebswert.

Durch den erfindungsgemäßen Vergleich wird eine Fahrbahnneigung erfaßt, wodurch eine durch die Fahrbahnneigung bedingte fehlerhafte Massenbestimmung vermieden wird, ohne daß ein weiterer Sensor für die Bestimmung der Masse und/oder zur Bestimmung der Fahrbahnneigung notwendig ist. Die Masse kann während eines einzigen Beschleunigungsvorgangs ermittelt werden, wobei der erfindungsgemäße Algorithmus einfach zu applizieren ist. Dabei hat sich herausgestellt, daß das erfindungsgmäß erzielte Ergebnis der Massenabschätzung für die Praxis genügend genau ist.

Besonders vorteilhaft ist es, daß zu dem erfindungsgemäßen vergleich bestimmt wird, ob der erfaßte zweite Beschleunigungswert innerhalb eines Intervalls liegt, wobei Beschleunigungswerte innerhalb dieses Intervall eine Fahrt auf einer im wesentlichen ebenen Fahrbahn repräsentieren.

Wird bei dem erfindungsgemäßen vergleich festgestellt, daß der erfaßte zweite Beschleunigungswert außerhalb des Intervalls liegt, so wird vorteilhafterweise der Massenwert abhängig von dem erfaßten zweiten Beschleunigungswert, insbesondere im Sinne einer durch die Fahrbahnneigung bedingten Korrektur, ermittelt. Auf diese Weise gelangt man auch bei einer geneigten Fahrbahn zu einem, wenn auch unter Umständen mit einem Fehler behafteten und im allgemeinen vorläufigen, Massenwert.

Zur Verbesserung der Massenbestimmung ist es vorteilhaft, daß wenigstens ein erster und ein zweiter Fahrwiderstandswert wenigstens abhängig von zwei erfaßten ersten Beschleunigungswerten und zwei erfaßten ersten Antriebswerten zu Zeitpunkten bestimmt werden, zu denen die Kupplung geschlossen ist. Zur Ermittlung des Massenwertes werden dann wenigstens einer der bestimmten Fahrwiderstandswerte herangezogen, wobei insbesondere vorgesehen ist, daß als Massenwert der Mittelwert aus wenigstens zwei der bestimmten Fahrwiderstandswerte ermittelt wird.

Zur Vermeidnung von unerwünschten Signalschwankungen können die bestimmten Fahrwiderstandswerte tiefpaßgefiltert werden.

Wird zur Ermittlung des Massenwertes oder zur Bestimmung der Fahrwiderstandswerte weiterhin ein die Fahrzeuggeschwindigkeit repräsentierender Wert und/oder ein die Drehgeschwindigkeit der Fahrzeugräder repräsentierender Wert herangezogen, so können die Einflüsse des Luftwiderstands und/oder der Trägheitsmomente der Fahrzeugräder bei der erfindungsgemäßen Massenbestimmung berücksichtigt werden.

Weitere vorteilhafte Ausgestaltungen sind den Unteransprüchen zu entnehmen.

Zeichnung

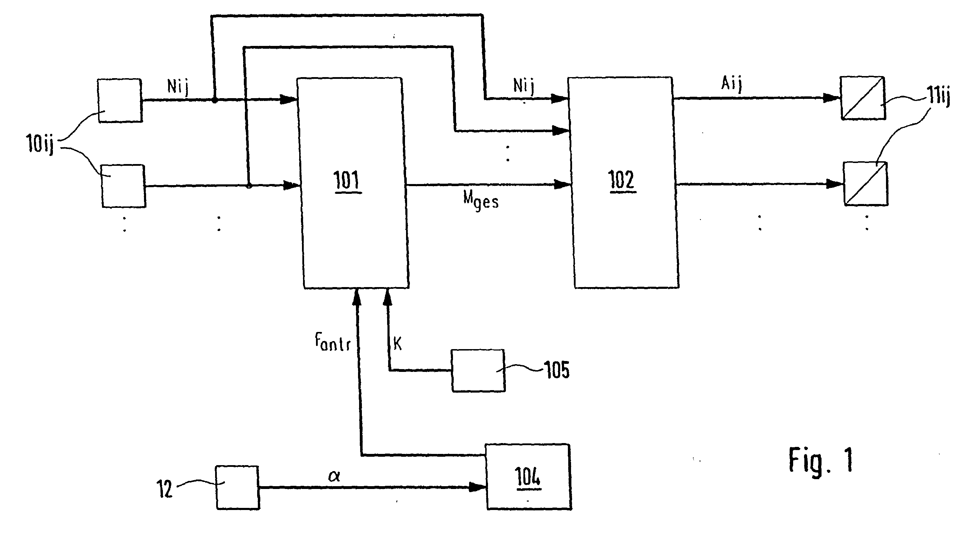

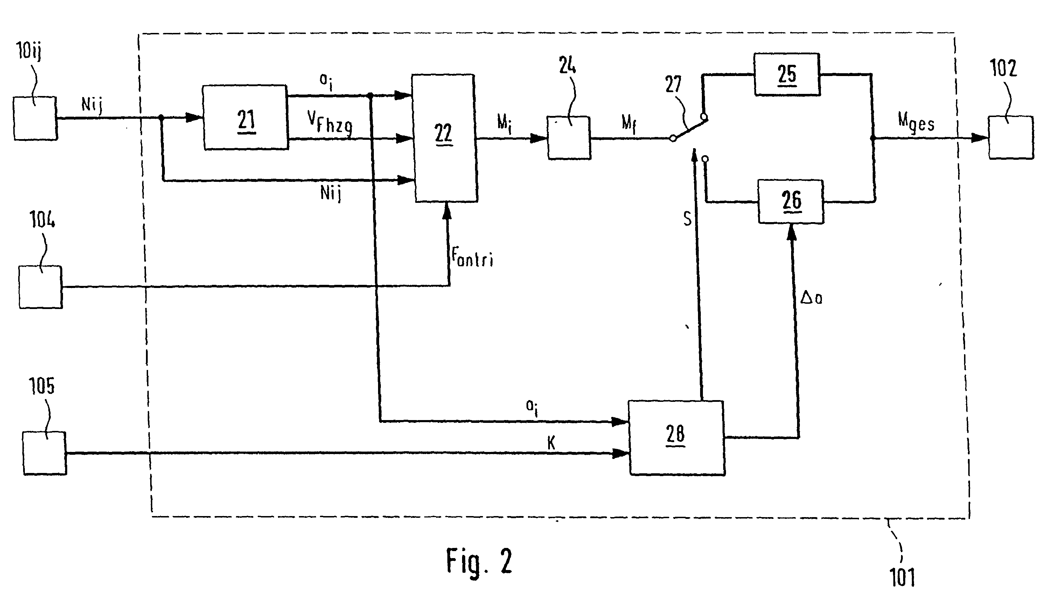

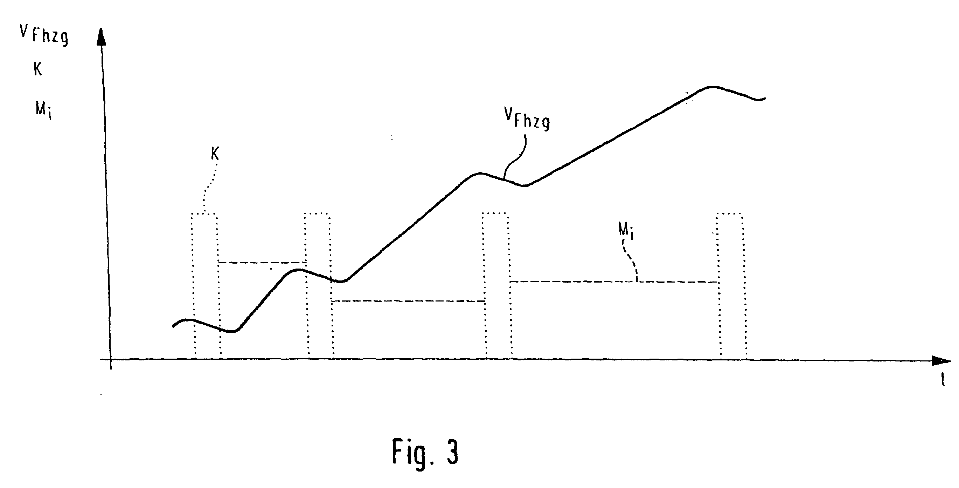

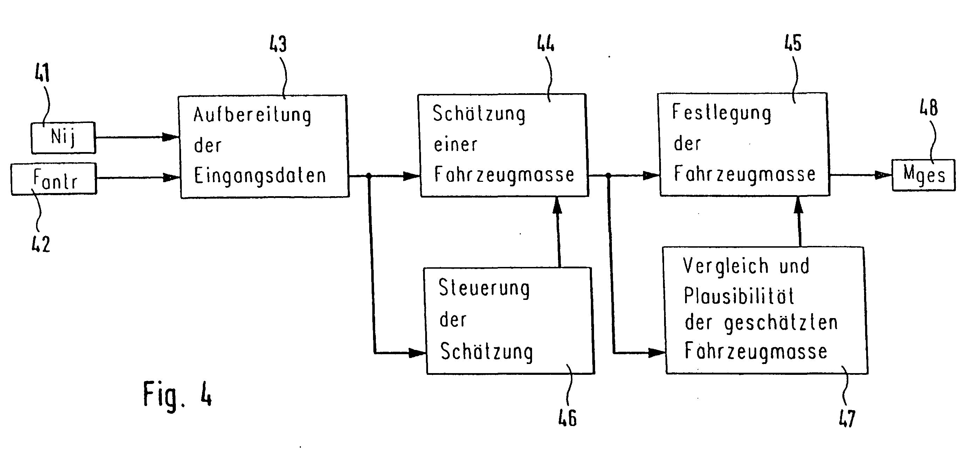

Die Figur 1 zeigt ein Übersichtsblockschaltbild der Erfindung, während das in der Figur 2 dargestellte Blockschaltbild detaillierter auf das Ausführungsbeispiel eingeht. In der Figur 3 sind die zeitlichen Verläufe der Fahrwiderstands- bzw. Massenwerte, Fahrzeuggeschwindigkeit sowie die Kupplungsbetätigung dargestellt. Die Figur 4 offenbart den erfindungsgemäßen Ablauf.

Ausführungsbeispiel

Anhand des im folgenden beschriebenen Ausführungsbeispiels soll die Erfindung beschrieben werden.

Die Figur 1 zeigt dazu mit den Blöcken 10ij Raddrehzahlsensoren, die die Drehgeschwindigkeiten der Fahrzeugräder erfassen. Die Raddrehzahlsignale Nij werden dem Block 101 zugeführt, der einen die Fahrzeuggesamtmasse repräsentierenden Massenwert $M_{ges}$ ermittelt und diesen dem Block 102 zuführt. Im Block 102 werden abhängig von der Gesamtmasse $M_{ges}$, den Raddrehzhalen Nij und gegebenenfalls abhängig von weiteren Signalen die Bremssysteme 11ij, insbesondere die einzelnen Radbremssysteme, durch die Ansteuersignale Aij angesteuert.

Zur Massenbestimmung wird dem Block 101 weiterhin die im Block 104 ermittelte Antriebskraft $F_{antr}$ beziehungsweise das Antriebsmoment zugeführt. Weiterhin wird dem Block 101 ein Signal K zugeleitet, das den Betriebszustand der Fahrzeugkupplung, die im Antriebsstrang zusammen mit dem Fahrzeugmotor und dem Fahrzeuggetriebe angeordnet ist, repräsentiert.

Im folgenden soll die Massenbestimmung 101 des Fahrzeuges oder der Fahrzeugkombination (Zugfahrzeug plus Anhänger oder Auflieger) näher beschrieben werden.

Ausgangspunkt für die Bestimmung der Masse $M_{ges}$ eines Fahrzeuges ist die Kraftbilanz bzw. eine Energiebilanz in der Längsrichtung der Fahrzeugbewegung. Dazu werden Betriebsphasen verwendet, in denen an den Rädern wirkenden Brems- und Antriebsmomente bekannt sind.

Im folgenden wird die Bestimmung der Masse $M_{ges}$ für eine Beschleunigung $a_{Fhzg}$ eines Fahrzeuges beschrieben. Für einen Beschleunigungsvorgang lautet die Kraftbilanz:

$$M_{ges} * a_{Fhzg} = F_{antr} - F_{Roll} - F_{Luft} - F_{Hang} - F_{Rot} \tag{1}$$

Hierbei bedeuten:

$a_{Fhzg}$     die Fahrzeugbeschleunigung
$F_{antr}$     die Antriebskraft
$F_{Roll}$     die Rollwiderstandskraft
$F_{Luft}$     die Luftwiderstandskraft
$F_{Hang}$     die Hangabtriebskraft
$F_{Rot}$     die Kraft zur Beschleunigung rotierender Massen (Räder, Getriebe, ...)

In der Figur 2 wird die aktuelle Fahrzeugbeschleunigung $a_{Fhzg} = a_i$ zum Zeitpunkt $t_i$ im Block 21 aus den Raddrehzahlen Nij in bekannter Weise durch Differenzieren gebildet. Die Bildung der aktuellen Antriebskraft $F_{antr} = F_{antri}$ zum Zeitpunkt $t_i$ wird im Block 104 im allgemeinen abhängig von den im Motorsteuergerät vorliegenden Daten ermittelt. Dies wird im Laufe dieses Ausführungsbeispiels noch beschrieben werden.

Die Luftwiderstandskraft $F_{Luft}$ kann nach der Gleichung

$$F_{Luft} = \frac{1}{2} * c_w * \rho_{Luft} * A * v_{Fhzg}^2 \qquad (2)$$

bestimmt werden, wobei für $c_w$ und $\rho_{Luft}$ plausible Näherungswerte eingesetzt werden. Die Fahrzeuglängsgeschwindigkeit $V_{Fhzg}$ wird ebenfalls aus den Raddrehzahlen in bekannter Weise im Block 21 gebildet.

Der Wert $F_{Rot}$ ergibt sich aus den gemessenen Raddrehzahlen $N_{Rad} = Nij$ und dem gesamten Trägheitsmoment aller Räder $J_{Rad}$:

$$F_{Rot} = \frac{dN_{Rad}}{dt} * J_{Rad} * \frac{1}{r_{Rad}} \qquad (3)$$

Bei Fahrzeuggespannen (Zugfahrzeug mit Auflieger oder Anhänger) mit ständig wechselnden Anhängern oder Aufliegern muß für das Trägheitsmoment der Anhänger- bzw. Aufliegerräder ein Ersatzwert angenommen werden.

Der Rollwiderstand $F_{Roll}$ wird in diesem Ausführungsbeispiel vernachlässigt.

Bei ebener Straße kann ein die Fahrzeugmasse zum Zeitpunkt $t_i$ repräsentierender Wert $M_i$ nach der Gleichung

$$M_i = \frac{F_{antri} - F_{Lufti} - F_{Roti}}{a_i} \qquad (4)$$

mit den zum Zeitpunkt $t_i$ aktuellen Werten $F_{antri}$, $a_i$, $F_{Roti}$, $F_{Lufti}$ bestimmt werden. Dies geschieht, zunächst unabhängig von der Fahrbahnneigung, im Block 22. Im Block 24 wird der so gewonnene Massenwert $M_i$ tiefpaßgefiltert zu dem gefilterten Massenwert $M_f$.

Befährt das Fahrzeug eine in Fahrtrichtung geneigte Fahrbahn (Steigung oder Gefälle), so führt die Gleichung (4) - sowie jede andere physikalische Bilanzgleichung - zu einem erheblichen Schätzfehler, da sich der Fahrwiderstand durch die Hangneigung erheblich verändert. Im Falle einer geneigten Fahrbahn beinhaltet der nach der Gleichung (4) ermittelte Massenwert $M_i$ einen erheblichen Fahrwiderstandsanteil.

Deshalb ist ein Verfahren notwendig, das bei zu großer Hangneigung die dadurch bewirkte Fahrwiderstandsänderung berücksichtigt und den errechneten Massenschätzwert verwirft bzw. Korrigiert. Für die Bestimmung der Fahrzeugmasse werden erfindungsgemäß Anfahrvorgänge beziehungsweise Beschleunigungsphasen des Fahrzeugs verwendet.

In dem in der Figur 2 gezeigten Block 28 wird die im Block 21 ermittelte Beschleunigung $a_i = a_{offen}$ zu den Zeitpunkten $t_i$ ausgewertet, zu denen die Kupplung des Fahrzeugs im wesentlichen geöffnet ist. Ein solches Öffnen der Kupplung findet während der Anfahrvorgänge im allgemeinen zur Unterbrechung des Kraftflusses zwischen Fahrzeugmotor und Getriebe während der Umschaltvorgänge des Übersetzungen im Fahrzeuggetriebe statt. Die Zeitpunkte, zu denen die Kupplung geöffnet ist, werden durch das Signal K bestimmt, das beispielsweise eine Kupplungsbetätigung des Fahrers repräsentiert.

Im Block 28 wird überprüft, ob die während des Öffnens der Kupplung erfaßten Beschleunigungswerte $a_{offen}$ innerhalb eines vorgebbaren Bereichs liegen. Dieser Bereich enthält die Beschleunigungswerte, die das Fahrzeug bei einer Kraftflußunterbrechung ohne eine wesentliche Fahrbahnneigung erreichen würde. Dies kann dadurch geschehen, daß die Beschleunigungswerte $a_{offen}$ mit einem oberen und einem unteren Schwellenwert verglichen werden.

Liegen die Werte $a_{offen}$ innerhalb des Bereiches (Fahrt ohne wesentliche Fahrbahnneigung), so wird durch das Signal S der Schalter 27 in die in der Figur 2 gezeigten Stellung gebracht. Im Block 25 wird dann durch eine Mittelwertbildung der Werte $M_f$ die Gesamtmasse $M_{ges}$ bestimmt.

Liegen die Werte $a_{offen}$ außerhalb des Bereiches (Fahrt auf einer in Fahrtrichtung geneigten Fahrbahn), so wird durch das Signal S der Schalter 27 derart angesteuert, daß im Block 26 der Mittelwert der Werte $M_f$ um den Wert der Fahrbahnsteigung korrigiert wird. Hierzu wird dem Block 26 die Abweichung $\Delta a$ (= $a_{offen} - a_{Ebene}$) des Wertes $a_{offen}$ von einem Wert $a_{Ebene}$ zugeführt, wobei der Wert $a_{Ebene}$ die Beschleunigung während einer Fahrt in der Ebene bei geöffneter Kupplung repräsentiert.

Bei offener Kupplung wird also eine Beschleunigung gemessen. Bei Verzögerungen, die dem Fahrwiderstand ohne Steigung entsprechen wird auf eine ebene Fahrbahn geschlossen und die Masseschätzung (25) in der Ebene erlaubt. Bei höheren bzw. kleineren Verzögerungen befindet sich das Fahrzeug in einer Steigung. In diesem Fall wird die Beschleunigung während der Antriebsphase um den Wert der Steigung korrigiert (Block 26).

Die Figur 4 zeigt den Ablauf des erfindungsgemäßen Vorgehensweise im Block 101. Nach der Aufbereitung 43 der Eingangsdaten Nij (41) und $F_{antri}$ (42) wird eine Fahrzeugmasse während einer beschleunigten Phase geschätzt (Gleichung 4, Block 44). Der Hangabtrieb wird dabei zunächst vernachlässigt. Die Steuerung 46 der Schätzung stellt dabei beispielsweise sicher, daß nur hinreichend hohe Bechleunigszustände zur Massenbildung herangezogen werden. Die Schätzung bzw. Berechnung der Masse wird nur innerhalb von bestimmten Schwellenwerten (Plausibilitätsüberprüfung) zugelassen. So muß eine beispielsweise eine minimale positive Fahrzeugbeschleunigung und eine minimale Antriebskraft vorhanden sein (Funktionsblock 46 "Steuerung der Schätzung"). Am Ausgang des Blocks 44 steht damit eine berechnete Fahrzeugmasse zur verfügung.

In einem weiteren Schritt 47 wird der Beschleunigungsvorgang dahingehend überprüft, ob sich das Fahrzeug in der Ebene befand oder um den Faktor Hangabtrieb korrigiert werden muß (Block 45). Hierzu werden, wie beschrieben, die Beschleunigungswerte ausgewertet, die während des Öffnens der Kupplung erfaßt worden sind. Weiterhin wird die im Block 44 ermittelte Masse unter Berücksichtigung von bereits bestimmten Zustandsgrößen wie Ladungswechsel überprüft und dann die aktuelle Fahrzeugmasse (Block 48) ausgegeben oder bestätigt. Durch die Berechnung von mehreren Werten mit anschließender Mittelung wird ein endgültiger Massewert bestimmt, um den ein Intervall gebildet wird um neu berechnete Werte auf Plausibilität zu überprüfen.

Die Figur 3 zeigt schematisch den zeitlichen Verlauf der Fahrwiderstands- bzw. Massenwerte $M_i$, der Fahrzeuggeschwindigkeit $V_{Fhzg}$ während eines Anfahrvorgangs. Während des Anfahrvorgangs wird zu den Getriebeschaltvorgängen die Kupplung geöffnet. Die ist in der Figur 3 mit dem Verlauf K zu sehen. Während des Öffnens der Kupplung sinkt im allgemeinen die Fahrzeuggeschwindigkeit kurzzeitig ab. Während die einzelnen Getriebegänge eingelegt sind, beschleunigt das Fahrzeug, woraufhin im Block 22 (Figur 2) je nach befahrener Fahrbahnsteigung unterschiedliche Fahrzeugmassen beziehungsweise Fahrwiderstände $M_i$ ermittelt werden.

Hier sei erwähnt, daß die Funktion des Blocks 22 nicht auf die o.g. Gleichung (4) beschränkt ist; es kann im Block 22 auch jedes andere Schätzverfahren eingesetzt werden.

Im folgenden wird auf die Ermittlung der Antriebskraft $F_{antri}$ im Block 104 eingegangen. Die zur Schätzung benötigte Antriebskraft $F_{antr}$ kann aus dem von der Motorsteuerung bereitgestellten Motormoment unter Berücksichtigung des Übersetzungsverhältnisses sowie der Verluste in Motor und Getriebe wie folgt berechnet werden:

Das von der Motorsteuerung EDC ausgegebene Motormoment $M_{Mot\_EDC}$ setzt sich aus dem Antriebsmoment $M_{Mot\_Antr}$, einem Motorverlustmoment $M_{Mot\_Verl}$ und einem Fahrzeugverlustmoment $M_{Fhzg\_Verl}$ zusammen.

$$M_{Mot\_EDC} = M_{Mot\_Antr} + M_{Mot\_Verl} + M_{Fhzg\_Verl} \tag{5}$$

$M_{Mot\_Antr}$ ist dabei das am Getriebeeingang wirkende Antriebsmoment. $M_{Mot\_Verl}$ ist der Anteil, welcher sich aus den Motorreibverlusten $M_{Mot\_Reib}$ und den Motorbeschleunigungsverlusten $M_{Mot\_\theta}$ (incl. Kupplung) zusammensetzt.

$$M_{Mot\_Verl} = M_{Mot\_Reib} + M_{Mot\_\theta} \tag{6}$$

Die Motorverluste $M_{Mot\_Verl}$ lassen sich durch Reibverluste $M_{Mot\_Reib}$ und Verluste durch die Beschleunigung des Motors $M_{Mot\_\theta}$ beschreiben. Dabei sind die Reibverluste des Motors eine Funktion der Motordrehzahl $n_{Mot}$ und der Wassertemperatur $t_{Wasser}$.

$$M_{Mot\_Reib} = f(n_{Mot}, t_{Wasser}) \tag{7}$$

Die Verluste, welche durch die Beschleunigung des Motors ($M_{Mot\_\theta}$) entstehen, ergeben sich aus der Motordrehzahlbeschleunigung und einem Trägheitsmoment $J_{Mot}$, welches den Motor sowie Teile des Antriebsstrangs enthält.

$$M_{Mot\_\theta} = f(\frac{dn_{Mot}}{dt}) = \frac{d\omega_{Mot}}{dt} * J_{Mot} \tag{8}$$

Unter Berücksichtigung der oben aufgeführten Verluste läßt sich dann aus dem Motorantriebsmoment mit Hilfe der Gesamtübersetzung $i_{ges}$ (Getriebe, Differential, ... ) ein Moment berechnen, welches an den Antriebsrädern wirkt.

$$M_{Antr} = \frac{M_{Mot\_Antr} * \eta_{Getr}}{i_{ges}} \tag{9}$$

Dabei entspricht $\eta_{Getr}$ dem Momentenverlust in Getriebe und Differential.

Die Gesamtübersetzung bestimmt sich aus dem Verhältnis von Motordrehzahl $n_{Mot}$ zur Raddrehzahl der angetriebenen Räder $n_{Rad}$

$$i_{ges} = \frac{n_{Mot}}{n_{Rad}} \qquad (10)$$

Aus dem Moment, welches an den Antriebsrädern wirkt bestimmt sich über den Radradius $r_{Rad}$ die Antriebskraft $F_{antr}$.

$$F_{antr} = \frac{M_{Antr}}{r_{Rad}} \qquad (11)$$

Wird während der beschleunigten Phase erkannt, daß andere Größen die Antriebskraft beeinflussen, so wird die Abschätzung der Masse unter- bzw. abgebrochen.

Eine Verbesserung der Massenschätzung kann durch die Berücksichtigung von Betriebszuständen, in denen sich das Fahrzeug befindet, erfolgen. Liegt z. B. während eines Anfahrvorgangs ein übermäßiger Antriebsschlupf vor, so daß beispielsweise eine Antriebsschlupfregelung zum Einsatz kommt, so sollte dieser Anfahrvorgang nicht zur Bestimmung der Masse zugelassen werden.

Weiterhin ist vorteilhaft, einen schon vorliegenden Wert für die Fahrzeugmasse als Startwert zu berücksichtigen. Als ein solcher Startwert kann beispielsweise ein gemessener Wert für die Achslast (ALB-Wert) herangezogen werden. Auf diese Weise kann die erfindungsgemäße Massenbestimmung optimiert werden.

Die Erfindung hat im wesentlichen folgende Vorteile:

- Kein weiterer Sensor ist für die Bestimmung der Masse nötig.
- Die Fahrzeugmasse wird während eines einzigen Beschleunigungsvorgangs ermittelt.
- Der erfindungsgemäße Algorithmus ist einfach applizierbar.
- Das erfindungsgmäß erzielte Ergebnis der Massenabschätzung ist für die Praxis genügend genau.


**Patentansprüche**

1.  Verfahren zur Ermittlung eines die Masse eines Kraftfahrzeugs, insbesondere eines Nutzkraftfahrzeugs, repräsentierenden Massenwertes ($M_{ges}$) mit einer Antriebseinheit und einer Kupplungseinheit, wobei durch ein Öffnen der Kupplungseinheit der Kraftfluß zwischen der Antriebseinheit und den Fahrzeugrädern im wesentlichen unterbrochen werden kann, mit den Schritten:

    - Erfassung wenigstens eines ersten Beschleunigungswertes ($a_1$), der die Fahrzeugbeschleunigung zu einem ersten Zeitpunkt, zu dem die Kupplungseinheit im wesentlichen geschlossen ist, repräsentiert,
    - Erfassung wenigstens eines ersten Antriebswertes ($F_{antr1}$), der die Antriebskraft oder das Antriebsmoment der Antriebseinheit zu dem ersten Zeitpunkt repräsentiert,
    - Erfassung wenigstens eines zweiten Beschleunigungswertes ($a_{offen}$), der die Fahrzeugbeschleunigung zu einem zweiten Zeitpunkt repräsentiert, zu dem die Kupplungseinheit im wesentlichen geöffnet ist,

    und **gekennzeichnet durch** folgende Schritten:

    - Vergleich des erfaßten zweiten Beschleunigungswertes ($a_{offen}$) mit wenigstens einem vorgebbaren Schwellenwert (Su, So),
    - Ermittlung des Massenwertes ($M_{ges}$) wenigstens abhängig von dem Vergleich und wenigstens abhängig von dem erfaßten ersten Beschleunigungswert ($a_1$) und dem erfaßten ersten Antriebswert ($F_{antr1}$).

2.  Verfahren nach Anspruch 1, **dadurch gekennzeichnet, daß** zu dem Vergleich bestimmt wird, ob der erfaßte zweite Beschleunigungswert ($a_{offen}$) innerhalb eines Intervalls ([Su, So]) liegt, wobei Beschleunigungswerte innerhalb dieses Intervall eine Fahrt auf einer im wesentlichen ebenen Fahrbahn repräsentieren.

3.  Verfahren nach Anspruch 2, **dadurch gekennzeichnet, daß** dann, wenn festgestellt wird, daß der erfaßte zweite Beschleunigungswert ($a_{offen}$) außerhalb des Intervalls ([Su, So]) liegt, der Massenwert ($M_{ges}$) abhängig von dem erfaßten zweiten Beschleunigungswert ($a_{offen}$), insbesondere im Sinne einer durch die Fahrbahnneigung bedingten Korrektur, ermittelt wird.

4. Verfahren nach Anspruch 1, **dadurch gekennzeichnet, daß** wenigstens ein erster und ein zweiter Fahrwiderstandswert ($M_1$, $M_2$) wenigstens abhängig von zwei erfaßten ersten Beschleunigungswerten ($a_1$, $a_2$) und zwei erfaßten ersten Antriebswerten ($F_{antr1}$, $F_{antr2}$) bestimmt werden.

5. Verfahren nach Anspruch 4, **dadurch gekennzeichnet, daß** zur Ermittlung des Massenwertes ($M_{ges}$) wenigstens einer der bestimmten Fahrwiderstandswerte ($M_1$, $M_2$) herangezogen wird, wobei insbesondere vorgesehen ist, daß als Massenwert ($M_{ges}$) der Mittelwert aus wenigstens zwei der bestimmten Fahrwiderstandswerte ($M_1$, $M_2$) ermittelt wird.

6. Verfahren nach Anspruch 4, **dadurch gekennzeichnet, daß** die bestimmten Fahrwiderstandswerte ($M_1$, $M_2$) tiefpaßgefiltert werden.

7. Verfahren nach Anspruch 1 oder 4, **dadurch gekennzeichnet, daß** die Ermittlung des Massenwertes ($M_{ges}$) oder zur Bestimmung der Fahrwiderstandswerte ($M_1$, $M_2$) weiterhin ein die Fahrzeuggeschwindigkeit repräsentierender Wert ($V_{Fhzg}$) und/oder ein die Drehgeschwindigkeit der Fahrzeugräder repräsentierender Wert ($V_{Rad}$) herangezogen wird.

8. Vorrichtung zur Ermittlung eines die Fahrzeugmasse repräsentierenden Massenwertes ($M_{ges}$), insbesondere bei einem Nutzkraftfahrzeug, mit einer Antriebseinheit und einer Kupplungseinheit, wobei durch ein Öffnen der Kupplungseinheit der Kraftfluß zwischen der Antriebseinheit und den Fahrzeugrädern im wesentlichen unterbrochen werden kann, mit

- ersten Erfassungsmitteln, mittels der wenigstens ein erster Beschleunigungswert ($a_1$), der die Fahrzeugbeschleunigung zu einem ersten Zeitpunkt repräsentiert, zu dem die Kupplungseinheit im wesentlichen geschlossen ist, und mittels der wenigstens ein zweiter Beschleunigungswert ($a_{offen}$), der die Fahrzeugbeschleunigung zu einem zweiten Zeitpunkt repräsentiert, zu dem die Kupplungseinheit im wesentlichen geöffnet ist, erfaßt wird,
- zweiten Erfassungsmitteln, mittels der wenigstens ein erster Antriebswert ($F_{antr1}$), der die Antriebskraft oder das Antriebsmoment der Antriebseinheit zu dem ersten Zeitpunkt repräsentiert, erfaßt wird,

**gekennzeichnet durch**

- Vergleichsmittel, mittels der der erfaßte zweite Beschleunigungswert ($a_{offen}$) mit wenigstens einem vorgebbaren Schwellenwert (Su, So) verglichen wird, und
- Mittel zur Ermittlung des Massenwertes ($M_{ges}$) wenigstens abhängig von dem Vergleich und wenigstens abhängig von dem erfaßten ersten Beschleunigungswert ($a_1$) und dem erfaßten ersten Antriebswert ($F_{antr1}$).

9. Vorrichtung nach Anspruch 8, **dadurch gekennzeichnet, daß** mittels der Vergleichsmittel bestimmt wird, ob der erfaßte zweite Beschleunigungswert ($a_{offen}$) innerhalb eines Intervalls ([Su, So]) liegt, wobei Beschleunigungswerte innerhalb dieses Intervall eine Fahrt auf einer im wesentlichen ebenen Fahrbahn repräsentieren, wobei insbesondere vorgesehen ist, daß dann, wenn festgestellt wird, daß der erfaßte zweite Beschleunigungswert ($a_{offen}$) außerhalb des Intervalls ([Su, So]) liegt, der Massenwertes ($M_{ges}$) abhängig von dem erfaßten zweiten Beschleunigungswert ($a_{offen}$), insbesondere im Sinne einer durch die Fahrbahnneigung bedingten Korrektur, ermittelt wird.

**Claims**

1. Method for determining mass value ($M_{ges}$) which represents the mass of a motor vehicle, in particular of a utility vehicle, with a drive unit and a clutch unit, the force flux between the drive unit and the vehicle wheels being capable of being essentially interrupted by opening the clutch unit, having the steps:

- at least a first acceleration value ($a_1$) which represents the vehicle acceleration at a first time at which the clutch unit is essentially closed is sensed,
- at least a first drive value ($F_{antr1}$) which represents the driving force or the driving torque of the drive unit at the first time is sensed,
- at least a second acceleration value ($a_{offen}$) which represents the vehicle acceleration at a second time at which the clutch unit is essentially opened,

and **characterized by** the following steps:

- the sensed second acceleration value ($a_{offen}$) is compared with at least one predefinable threshold value (Su, So),
- the mass value ($M_{ges}$) is determined at least as a function of the comparison and at least as a function of the sensed first acceleration value ($a_1$) and the sensed first drive value ($F_{antr1}$).

2. Method according to Claim 1, **characterized in that** for the comparison it is determined whether the sensed, second acceleration value ($a_{offen}$) lies within an interval ([Su, So]), acceleration values within this interval representing travel on an essentially level underlying surface.

3. Method according to Claim 2, **characterized in that** if it is detected that the sensed, second acceleration value ($a_{offen}$) lies outside the interval ([Su, So]), the mass value ($M_{ges}$) is determined as a function of the sensed, second acceleration value ($a_{offen}$), in particular in the sense of a correction which is conditioned by the inclination of the underlying surface.

4. Method according to Claim 1, **characterized in that** at least a first and a second travel resistance value ($M_1$, $M_2$) are determined at least as a function of two sensed, first acceleration values ($a_1$, $a_2$) and two, sensed, first drive values ($F_{antr1}$, $F_{antr2}$).

5. Method according to Claim 4, **characterized in that** at least one of the particular travel resistance values ($M_1$, $M_2$) is used to determine the mass value ($M_{ges}$), there being in particular provision for the mean value to be determined, as mass value ($M_{ges}$), from at least two of the particular travel resistance values ($M_1$, $M_2$).

6. Method according to Claim 4, **characterized in that** the particular travel resistance values ($M_1$, $M_2$) are low-pass filtered.

7. Method according to Claim 1 or 4, **characterized in that** the value ($V_{Fhzg}$) which represents the vehicle speed and/or a value ($V_{Rad}$) which represents the rotary speed of the vehicle wheels continue to be used to acquire the mass value ($M_{ges}$) or to determine the travel resistance values ($M_1$, $M_2$).

8. Device for determining a mass value ($M_{ges}$) which represents the vehicle mass, in particular in the case of a utility vehicle, with a drive unit and a clutch unit, the force flux between the drive unit and the vehicle wheels being capable of being essentially interrupted by opening the clutch unit, having

- first sensing means by means of which at least a first acceleration value ($a_1$) which represents the vehicle acceleration at a first time at which the clutch unit is essentially closed, is sensed, and by means of which at least a second acceleration value ($a_{offen}$) which represents the vehicle acceleration at a second time at which the clutch unit is essentially opened is sensed,
- second sensing means by means of which at least a first drive value ($F_{antr1}$) which represents the driving force or the driving torque of the drive unit at the first time is sensed,

**characterized by**

- comparator means which compare the sensed second acceleration value ($a_{offen}$) with at least one predefinable threshold value (Su, So), and
- means for determining the mass value ($M_{ges}$) at least as a function of the comparison and at least as a function of the sensed, first acceleration value ($a_1$) and the sensed, first drive value ($F_{antr1}$).

9. Device according to Claim 8, **characterized in that** the comparator means determine whether the sensed, second acceleration value ($a_{offen}$) lies within an interval ([Su, So]), the acceleration values within this interval representing travel on an essentially level underlying surface, there being in particular provision that when it is detected that the sensed, second acceleration value ($a_{offen}$) lies outside the interval ([Su, So]), the mass value ($M_{ges}$) is determined as a function of the sensed, second acceleration value ($a_{offen}$), in particular in the sense of a correction which is conditioned by the inclination of the underlying surface.

**Revendications**

1. Procédé de détermination d'une valeur de masse ($M_{ges}$) représentant la masse d'un véhicule automobile, en particulier d'un véhicule utilitaire, comportant une unité motrice et une unité d'embrayage, le flux de forces présent entre l'unité motrice et les roues du véhicule pouvant être pour l'essentiel interrompu par une ouverture de l'unité d'embrayage, et comportant les étapes consistant à :

   - enregistrer au moins une première valeur d'accélération ($a_1$), qui représente l'accélération du véhicule à un premier instant, auquel l'unité d'embrayage est pour l'essentiel fermée,
   - enregistrer au moins une première valeur d'entraînement ($F_{antr1}$), qui représente la force motrice ou le couple d'entraînement de l'unité motrice au premier instant,
   - enregistrer au moins une deuxième valeur d'accélération ($a_{offen}$), qui représente l'accélération du véhicule à un deuxième instant, auquel l'unité d'embrayage est pour l'essentiel ouverte,

   **caractérisé par**
   les étapes suivantes, consistant à :

   - comparer la deuxième valeur d'accélération enregistrée ($a_{offen}$) avec au moins une valeur de seuil pouvant être prédéterminée (Su, So),
   - déterminer la valeur de masse ($M_{ges}$) au moins en fonction de la comparaison et au moins en fonction de la première valeur d'accélération enregistrée ($a_1$) et de la première valeur d'entraînement enregistrée ($F_{antr1}$).

2. Procédé selon la revendication 1,
   **caractérisé en ce que**
   lors de la comparaison, on détermine si la deuxième valeur d'accélération enregistrée ($a_{offen}$) se trouve au sein d'un intervalle ({Su, So}), les valeurs d'accélération présentes au sein de cet intervalle représentant un trajet sur une chaussée pour l'essentiel plane.

3. Procédé selon la revendication 2,
   **caractérisé en ce que**
   lorsqu'il est établi que la deuxième valeur d'accélération enregistrée ($a_{offen)}$ se trouve à l'extérieur de l'intervalle ({Su, So}), la valeur de masse ($M_{ges}$) est déterminée en fonction de la deuxième valeur d'accélération enregistrée ($a_{offen}$), en particulier au sens d'une correction nécessitée par l'inclinaison de la chaussée.

4. Procédé selon la revendication 1,
   **caractérisé en ce qu'**
   au moins une première et une deuxième valeurs de résistance au roulement ($M_1$, $M_2$) sont déterminées au moins en fonction de deux premières valeurs d'accélération enregistrées ($a_1$, $a_2$) et de deux premières valeurs d'entraînement enregistrées ($F_{antr1}$, $F_{antr2}$).

5. Procédé selon la revendication 4,
   **caractérisé en ce que**
   pour déterminer la valeur de masse ($M_{ges}$), on fait appel à au moins l'une des valeurs de résistance au roulement déterminées ($M_1$, $M_2$), en prévoyant en particulier que la valeur moyenne calculée à partir de deux des valeurs de résistance au roulement déterminées ($M_1$, $M_2$) soit déterminée en tant que valeur de masse ($M_{ges}$).

6. Procédé selon la revendication 4,
   **caractérisé en ce que**
   les valeurs de résistance au roulement ($M_1$, $M_2$) déterminées sont filtrées par un filtre passe-bas.

7. Procédé selon la revendication 1 ou 4,
   **caractérisé en ce que**
   pour déterminer la valeur de masse ($M_{ges}$) ou pour déterminer les valeurs de résistance au roulement ($M_1$, $M_2$), on fait en outre appel à une valeur représentant la vitesse du véhicule ($V_{Fhzg}$) et/ou à une valeur représentant la vitesse de rotation des roues du véhicule ($V_{Rad}$).

8. Dispositif de détermination d'une valeur de masse ($M_{ges}$) représentant la masse du véhicule, en particulier pour un véhicule utilitaire, comportant une unité motrice et une unité d'embrayage, dont une ouverture de l'unité d'embrayage peut pour l'essentiel interrompe le flux de forces présent entre l'unité motrice et les roues du véhicule, et comportant :

- des premiers moyens d'enregistrement, qui permettent d'enregistrer au moins une première valeur d'accélération ($a_1$), qui représente l'accélération du véhicule à un premier instant auquel l'unité d'embrayage est pour l'essentiel fermée, et qui permettent d'enregistrer au moins une deuxième valeur d'accélération ($a_{offen}$), qui représente l'accélération du véhicule à un deuxième instant auquel l'unité d'embrayage est pour l'essentiel ouverte,
- des deuxièmes moyens d'enregistrement, qui permettent d'enregistrer au moins une première valeur d'entraînement ($F_{antr1}$), qui représente la force motrice ou le couple d'entraînement de l'unité motrice au premier instant,

**caractérisé par**

- des moyens de comparaison, qui permettent de comparer la deuxième valeur d'accélération enregistrée ($a_{offen}$) avec au moins une valeur de seuil pouvant être prédéterminée (Su, So), et
- des moyens de détermination de la valeur de masse ($M_{ges}$) au moins en fonction de la comparaison et au moins en fonction de la première valeur d'accélération enregistrée ($a_1$) et de la première valeur d'entraînement enregistrée ($F_{antr1}$).

9. Dispositif selon la revendication 8,
**caractérisé en ce que**
grâce aux moyens de comparaison, on détermine si la deuxième valeur d'accélération enregistrée ($a_{offen}$) se trouve au sein d'un intervalle ({Su, So}), les valeurs d'accélération présentes au sein de cet intervalle représentant un trajet sur une chaussée pour l'essentiel plane, en prévoyant en particulier que lorsqu'il est établi que la deuxième valeur d'accélération enregistrée ($a_{offen}$) se trouve à l'extérieur de l'intervalle ({Su, So}), la valeur de masse ($M_{ges}$) est déterminée en fonction de la deuxième valeur d'accélération enregistrée ($a_{offen}$), en particulier au sens d'une correction nécessitée par l'inclinaison de la chaussée.

Fig. 1

$10ij$ $N_{ij}$ $101$ $N_{ij}$ $102$ $A_{ij}$ $11ij$

$M_{ges}$

$F_{antr}$ $K$ $105$

$12$ $\alpha$ $104$

EP 0 925 486 B1

Fig. 2

EP 0 925 486 B1

Fig. 3

EP 0 925 486 B1

EP 0 925 486 B1

41

| Nij |

| Fantr |

42

43
Aufbereitung der Eingangsdaten

44
Schätzung einer Fahrzeugmasse

45
Festlegung der Fahrzeugmasse

48
| Mges |

46
Steuerung der Schätzung

47
Vergleich und Plausibilität der geschätzten Fahrzeugmasse

Fig. 4